# EUROPEAN PATENT APPLICATION

(11) **EP 2 264 994 A1**
(43) Date of publication of application: **22.12.2010**
(21) Application number: 08714986.0
(22) Date of filing: 18.03.2008
(51) Int. Cl.: H04M 3/42

(54) **A METHOD AND DEVICE FOR AUTOMATICALLY PROCESSING UNANSWERED CALL IN A COMMUNICATION TERMINAL**

(71) Applicant: Lucent Technologies Inc., Murray Hill, NJ 07974-0636 (US)
(72) Inventor: HUAN, Hengxi, Qingdao Shandong 266101 (CN)
(74) Representative: Hervouet, Sylvie
(86) International application number: PCT/CN2008/000533
(87) International publication number: WO 2009/114957

(57) **Abstract**

The present invention proposes a technical solution of automatically handling missed calls caused by the user's unavailability for calling. According to the first aspect of the present invention, there is provided a method of handling missed calls in a communication terminal. The method comprises the following steps: a. detecting whether a user of the communication terminal is available for calling again; b. obtaining missed calls caused by the unavailability of the user of the communication terminal and reestablishing the missed calls when the user is available for calling again. According to the second aspect of the present invention, there is provided an apparatus for handling missed calls in a communication terminal. The apparatus comprises a first detecting means for detecting whether a user of the communication terminal is available for calling again; and a first operating means for obtaining missed calls caused by the unavailability of the user of the communication terminal and reestablishing the missed calls when the user is available for calling again. By applying the method and apparatus of handling the missed calls provided by the present invention, the calling party can know the information about when the called party is available for calling again timely so that the call could be reestablished as quickly as possible.

## Description

### FIELD OF THE INVENTION

The invention relates to method and apparatus for handling missed calls in the communication network, and especially to method and apparatus for automatically handling missed calls in the communication terminal.

### BACKGROUD OF THE INVENTION

In business telecommunications environment, it often happens that when a calling party (a.k.a. caller) makes a call to a user, but the user is away from the telephone and unavailable for the call, and his/her mobile phone (or cellular phone) is powered off at the same time or the calling party does not know the user's mobile phone number, then the calling party has to wait for some time and re-try the call (especially for an urgent call) till the user answers the call because the calling party does not know when the user will come back and answer the call, or when the user's mobile phone will be powered on and be reached.

Many techniques have been developed to solve the above problem, among which two solutions are described as follows:

In the first one, if the user's telephone has the function of displaying the calling party's number or recording the voice message from the calling party, then when the user comes back and hears the voice message or sees the missed calls, he/she may call back.

In the second one, if the user's mobile phone has the function of recording the missed calls and/or short messages (SMS) during his/her mobile phone is inaccessible, then when his/her mobile phone is accessible, the user can view the missed calls and/or short message (SMS) and may call back.

Currently, there is no method and apparatus that makes it possible for the calling party to actively know when the user is available.

### SUMMARY

To solve the above drawbacks of the prior arts, the present invention proposes a technical solution of automatically handling missed calls in a communication terminal by detecting whether the user is available for calling again.

According to the first aspect of the present invention, there is provided a method of handling missed calls in a communication terminal. The method comprises: a. detecting whether a user of the communication terminal is available for calling again; b. obtaining missed calls and reestablishing the missed calls when the user is available for calling again.

According to the second aspect of the present invention, there is provided an apparatus for handling missed calls in a communication terminal. The apparatus comprises: a first detecting means for detecting whether a user of the communication terminal is available for calling again; and a first operating means for obtaining missed calls and reestablishing the missed calls when the user is available for calling again.

By applying the method and apparatus of handling the missed calls provided by the present invention, the calling party can know the information about when the called party is available for calling again timely, so that the call could be reestablished as quickly as possible.

### BRIEF DESCRIPTION OF THE DRAWINGS

The invention will now be described in more detail with reference to preferred embodiments thereof and also with reference to the accompanying drawings. It should be understood that the present invention is not limited to the embodiments.
Fig.1 illustrates a schematic view of the application circumstance according to the present invention;
Fig.2 illustrates a flowchart of a method of handling missed calls of a communication terminal according to the present invention;
Fig.3 illustrates a flowchart of a method of handling missed calls of a communication terminal according to one embodiment of the present invention;
Fig.4 illustrates a flowchart of a method of handling missed calls of a communication terminal according to one embodiment of the present invention;
Fig.5 illustrates a flowchart of a method of handling missed calls of a communication terminal according to one embodiment of the present invention;
Fig.6 illustrates a flowchart of a method of handling missed calls of a communication terminal according to one embodiment of the present invention;
Fig.7 illustrates a block diagram of an apparatus for handling missed calls of a communication terminal according to one embodiment of the present invention;
Fig.8 illustrates a block diagram of the first detecting means in Fig.7 according to one embodiment of the present invention;
Fig.9 illustrates a block diagram of the first detecting means in Fig.7 according to one embodiment of the present invention;
Fig.10 illustrates a block diagram of an apparatus for handling missed calls of a communication terminal according to one embodiment of the present invention;
Fig.11 illustrates a schematic view of a telecommunication environment according to the present invention and in combination with the existing telecommunication system;
Fig.12 illustrates a block diagram of a telephone according to one embodiment of the present invention;
Fig.13 illustrates a block diagram of a mobile phone according to one embodiment of the present invention.

### DETAILED DESCRIPTION

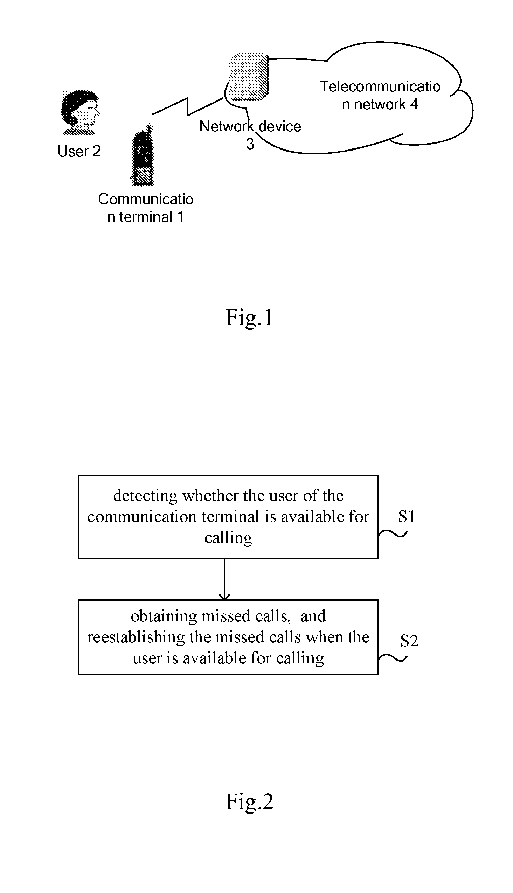

Fig.1 illustrates a schematic view of the application circumstance according to the present invention, which comprises a user 2 and a communication terminal 1 used by the user 2, a telecommunication network 4, and a network device 3 therein.

According to the present invention, as default, the communication terminal is configured to be bound to its user by, for example, storing its user's identifying information, e.g. an office telephone assigned to a user or a mobile phone owned by a user.

Fig.2 illustrates a flowchart of handling missed calls of a communication terminal according to the present invention.

Referring to Fig.2, according to the technical solution of the present invention, there needs two steps for handling missed calls of a communication terminal in case that a calling party makes a call to the communication terminal 1 of the user 2, but the user 2 is unavailable. Firstly, in step S1, the communication terminal 1 of the user 2 detects whether the user 2 is available for calling. Then, when the user 2 is available for calling, in step S2, the communication terminal 1 obtains missed calls and reestablishes them. Without loss of generality, the communication terminal 1 of the user 2 may be a telephone or a mobile phone.

In case that the communication terminal 1 is a telephone, the most likely reason that causes the unavailability of its user 2 is that the user 2 is away from the communication terminal 1. Accordingly, whether the user 2 is available for calling depends on whether the user 2 is close enough to the communication terminal 1.

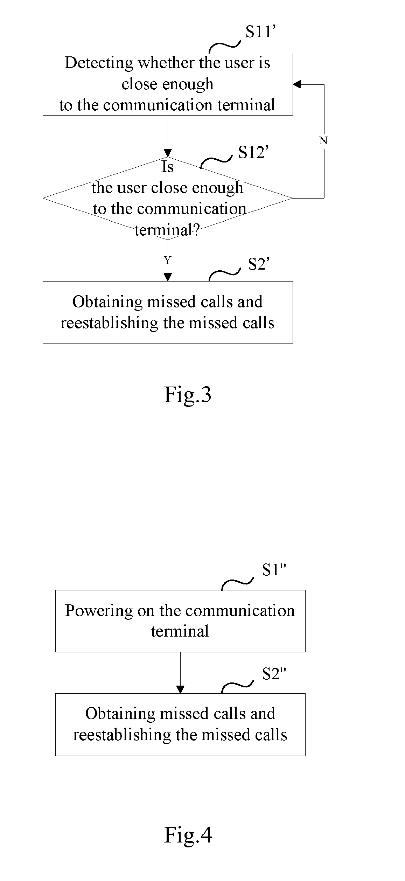

Fig.3 illustrates a flowchart of a method of handling missed calls of communication terminal according to one embodiment of the present invention. With reference to Fig.3, the specific process will be described as follows. Firstly in step S11', the communication terminal 1 detects whether the user 2 is close enough to the communication terminal 1. Then in step S12', a judgment is provided for judging whether the user 2 is close enough to the communication terminal 1. To be specific, step S11' further comprises a detecting step and a comparing step. In the detecting step, the communication terminal 1 detects the characteristic information of any person close to the communication terminal 1. Then in the comparing step, the communication terminal 1 compares the detected characteristic information with the prestored characteristic information of its user 2. If the detected characteristic information matches the prestored characteristic information of the user 2, then it is determined that the user 2 is close enough to the communication terminal 1; otherwise, it is determined that the user 2 is not close enough to the communication terminal 1. It should be understood that the characteristic information of a person hereinabove includes, but is not limited to physical features, dactylogram or eye iris of the person.

Furthermore, the communication terminal 1 may determine whether the user 2 is close enough to the communication terminal 1 by detecting the signal comprising the ID information of the user 2 which is transmitted and feedback by the wireless ID card carried by the user 2. Optionally, those skilled in the art shall understand that the step of determining whether the user 2 is close enough to the communication terminal 1 may also be achieved by detecting the distance between the user 2 and the communication terminal 1 and comparing the distance with a distance threshold, wherein the distance threshold may be preset according to the empirical value, which may be the normal distance that a person can hear the ring of a communication terminal.

With regard to step S2', it should be understood that the missed calls could be obtained in this step either from network device 3 or from internal memory of the communication terminal 1. As for the obtained missed calls, at least two approaches could be used to reestablish the missed calls. One is calling back the calling parties of the missed calls when the user 2 is available for calling, and the other is sending a notification message to the calling parties of the missed calls when the user 2 is available for calling. The notification massage hereinabove includes but is not limited to SMS, Email or Callback.

In case that the communication terminal 1 is a mobile phone, besides the user 2 is away from the mobile phone 1, the most likely reason that causes the unavailability of its user 2 is that the mobile phone 1 is powered off or not in the service area. Accordingly, whether the user 2 is available for calling depends on whether its mobile phone is powered on. As shown in Fig.4, according to one embodiment of the present invention, the communication terminal 1 of the user 2 is powered on in step S1"; and then, in step S2", the communication terminal 1 obtains and reestablishes the missed calls. It should be understood that the missed calls is most likely obtained from a network device 3 in this embodiment, because the communication terminal 1 couldn't record the missed calls when it is powered off.

Sometimes the mobile phone is powered on and goes into the service area, but the user 2 is away from it. Then, whether the user 2 is available for calling further depends on whether the user 2 is close enough to the mobile phone.

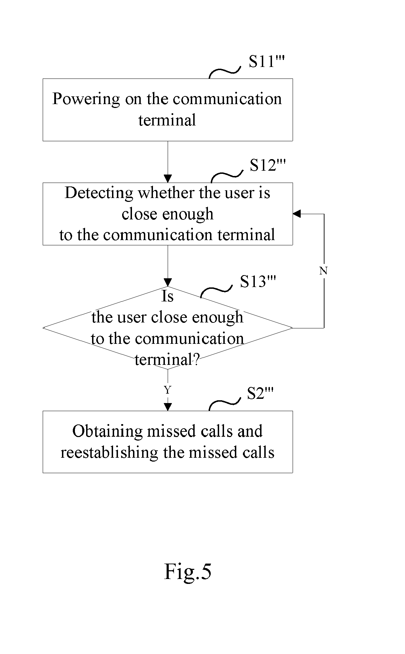

Fig.5 illustrates a flowchart of a method of handling missed calls of a communication terminal according to one embodiment of the present invention. With reference to Fig.5, the specific process will be described as follows. Firstly in step11"', the communication terminal 1 of the user 2 is powered on. Then in step S12"', the communication terminal 1 detects the status of its user 2. To be specific, step S12"' further comprises a detecting step and a comparing step. In the detecting step, the communication terminal 1 detects the characteristic information of any person close to the communication terminal 1. The characteristic information of a person hereinabove includes, but is not limited to physical features, dactylogram or eye iris of the person. In the comparing step, the communication terminal compares the detected characteristic information with the prestored characteristic information of its user 2. And then in step S13"', the communication terminal 1 determines whether the user 2 is close enough to the communication terminal 1 according to the detection result in step S12"'. If the detected characteristic information matches the prestored characteristic information of the user 2, it is determined that the user 2 is close enough to the communication terminal 1 and then it goes into step S2" to perform next process; otherwise, it is determined that the user 2 is not close enough to the communication terminal 1 and then it goes back to step S12"' to detect once again. Furthermore, the communication terminal 1 may determine whether the user 2 is close enough to the communication terminal 1 by use of the method of detecting the signal comprising the ID information of the user 2 which is transmitted and feedback by the wireless ID card carried by the user 2 as described above. And then, when the user 2 is close enough to the communication terminal 1, i.e., the user 2 is available for calling, the communication terminal 1 obtains and reestablishes the missed calls in step S2"'.

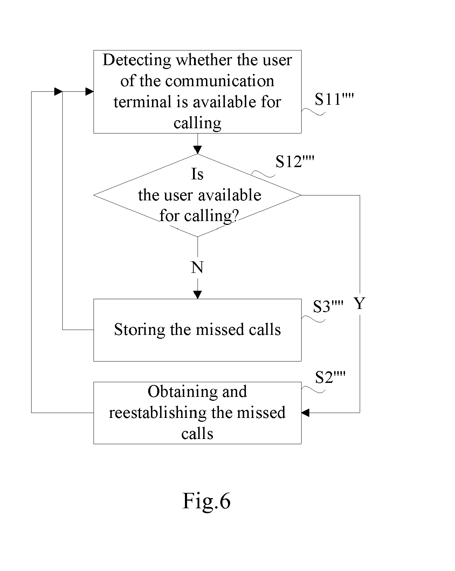

Fig.6 illustrates a flowchart of a method of handling missed calls of the communication terminal according to a preferable embodiment of the present invention. With reference to Fig.6, the specific process will be described as follows. To be specific, in step S11"", the communication terminal 1 detects whether the user 2 is available for calling. Then in step S12"", the communication terminal 1 judges whether its user 2 is available for calling according to the detection result. If the user 2 is unavailable for calling, then it goes to step S3"", relevant information of incoming missed calls (if any), such as the time and the identifying information of the calling parties, are recorded and stored. If the user 2 is available for calling, then it goes to step S2"", the communication terminal 1 obtains and reestablishes the missed calls stored in step S3"". Namely, the missed calls are stored during the unavailable period of the user 2 and reestablished during the available period of the user 2. Thus only those missed calls which were missed due to the unavailability of the user 2 are reestablished for advantages. It should be understood that in step S3"", recording and storing of the relevant information of the missed calls could be executed either by a network device 3 or by the communication terminal 1 itself. If a network device 3 recorded and stored missed calls in step S3"", then the communication terminal 1 obtains the missed calls from the network device 3 in step S2"". If the communication terminal 1 recorded and stored missed calls itself in step S3"", the communication terminal 1 obtains the missed calls from an internal memory in step S2"".

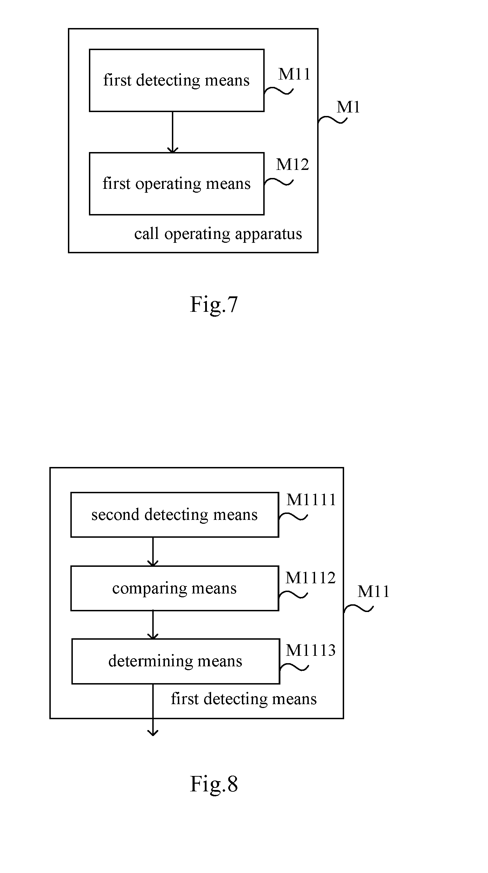

Fig.7 illustrates a block diagram of an apparatus for handling missed calls of a communication terminal according to one embodiment of the present invention. The call operating apparatus M1 for handling missed calls of a communication terminal is installed in the communication terminal 1 of the user 2. As shown in Fig.7, it comprises a first detecting means M11 and a first operating means M12. The first detecting means M11 is operable for detecting whether the user 2 of the communication terminal 1 is available for calling. And then, when the user 2 is available for calling again, the first operating means M12 obtains missed calls (if any) and reestablishes the missed calls.

With reference to the above descriptions, there are at least two probable structures of the first detecting means M11.

With reference to Fig.8, according to an embodiment of the present invention, the first detecting means M1 comprises a second detecting means M1111, a comparing means M1112 and a determining means M1113. This structure is likely used in a telephone.

When a person comes close to the communication terminal 1 of the user 2, the second detecting means M1111 detects the characteristic information of the person. The characteristic information herein includes, but is not limited to physical features, dactylogram or eye iris of the person. And then, the comparing means M1112 compares the detected characteristic information with the prestored characteristic information of the user 2. Then, the determining means M1113 determines whether the user 2 is available for calling according to the comparison outcome. If the detected characteristic information matches the prestored characteristic information of the user 2, the determining means M1113 determines that the user 2 is available for calling; otherwise, the determining means M1113 determines that the user 2 is unavailable for calling.

Furthermore, whether the user 2 is available for calling can be determined by the following way. Firstly, the second detecting means M1111 detects the strength of the signal comprising the ID information of the user 2 which is transmitted and feedback by the wireless ID card carried by the user 2. Then the comparing means M1112 compares the detected signal strength with a signal strength threshold. The signal strength threshold calculably corresponds to a distance threshold, and the distance threshold may be preset according to the empirical value, which may be the normal distance that a person can hear the ring of a communication terminal. Then the determining means M1113 determines whether the user 2 is available for calling according to the comparison outcome. If the detected signal strength is larger than the signal strength threshold, then the determining means M1113 determines that the user 2 is available for calling; otherwise, the determining means M1113 determines that the user 2 is unavailable for calling.

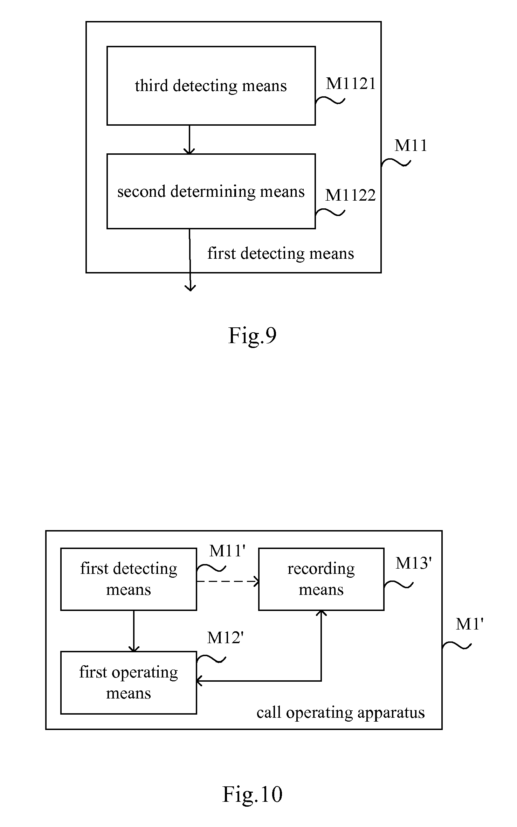

With reference to Fig.9, according to another embodiment of the present invention, the first detecting means M11 comprises a third detecting means M1121 and a second determining means M1122. This structure is likely used in a mobile phone.

To be specific, the third detecting means M1121 is operable for detecting whether the communication terminal 1 of the user 2 is powered on. And then, the second determining means M1122 is operable for determining whether the user 2 is available for calling according to the detection result of the third detecting means M1121. If the third detecting means M1121 detects that the communication terminal 1 of the user 2 is powered on, then the second determining means M1122 determines that the user 2 is available for calling.

Sometimes the communication terminal 1 is powered on, but the user 2 is away from it, and therefore the user 2 is still unavailable for calling. Then, whether the user 2 is available for calling further depends on whether the user 2 is close enough to the communication terminal 1.

According to another embodiment of the present invention, the first detecting means M11 further comprises a sub-detecting means (not illustrated in Fig.9) for detecting whether the user 2 is close enough to the communication terminal 1. When the second determining means M 1122 determines whether the user 2 is available for calling, it should further take the detection result of the sub-detecting means into account. If the communication terminal 1 is powered on and the user 2 is close enough to it, then the second determining means M1122 determines that the user 2 is available for calling; otherwise, it determines that the user 2 is unavailable for calling.

To be more specific, the sub-detecting means further comprises a second sub-detecting means, a sub-comparing means and a sub-determining means. The second sub-detecting means is operable for detecting the characteristic information of a person close to the communication terminal 1. The sub-comparing means is operable for comparing the detected characteristic information with the prestored characteristic information of the user 2. The sub-determining means is operable for determining whether the user 2 is close enough to the communication terminal 1 according to the comparison outcome. Or the second sub-detecting means is operable for detecting the strength of the signal comprising the ID information of the user 2 which is transmitted and feedback by the wireless ID card carried by the user 2. The sub-comparing means is operable for comparing the detected signal strength with a signal strength threshold. The sub-determining means is operable for determining whether the user 2 is close enough to the communication terminal 1 according to the comparison outcome.

With regard to the first operating means M12, it should be understood that the missed calls could be obtained either from a network device 3 or from internal memory of the communication terminal 1, which depends on where these missed calls initially stores. And there are at least two approaches which could be used to reestablish the missed calls in the first operating means M12. One is calling back the calling parties of the missed calls when the user 2 is available for calling, and the other is sending a notification massage to the calling parties of the missed calls when the user 2 is available for calling. The notification massage hereinabove includes but is not limited to SMS, Email or Callback.

Fig.10 illustrates a block diagram of an apparatus for handling missed calls of a communication terminal according to a preferable embodiment of the present invention. The call operating apparatus M1' for handling missed calls of a communication terminal is installed in the communication terminal 1 of the user 2. As shown in Fig.10, the call operating apparatus M1' comprises a first detecting means M11', a first operating means M12' and a recording means M13'. The structure applicable to the first detecting means M11 which is described above is also applicable to the first detecting means M11'. The call operating apparatus M1' is distinguished from the call operating apparatus M1 mainly by the recording means M13' which is operable for storing the relevant information of the missed calls (if any) when the user 2 is unavailable for calling. The relevant information herein comprises the time of the missed calls and the identifying information of the calling parties.

To be specific, firstly, the first detecting means M11' detects whether the user 2 is available for calling. When the status of the user 2 changes from availability to unavailability, the recording means M13' starts storing the relevant information of the possible forthcoming missed calls. On the contrary, when the status of the user 2 changes from unavailability to availability, the recording means M13' stops storing the relevant information of the missed calls, and the first operating means M12' starts obtaining the relevant information of the missed calls stored in the recording means M13' and reestablishing these missed calls until all these missed calls are completely handled or the first detecting means M11' detects that the status of the user 2 changes from availability to unavailability once again. After a missed call is reestablished by the first operating means M12', preferably, its relevant information is deleted from the recording means M13'. In this way, only those missed calls caused by the unavailability of the user 2 are reestablished.

If the communication terminal 1 of the user 2 can not record the missed calls during the unavailable period of the user 2, then the call operating means M1' comprises the first detecting means M11' and the first operating means M12'. The function of the recording means M13' is achieved by a network device 3. To be specific, firstly the first detecting means M11' detects whether the user 2 is available for calling. When the status of the user 2 changes from availability to unavailability, the network device 3 starts recording the relevant information of the possible forthcoming missed calls. On the contrary, when the status of the user 2 changes from unavailability to availability, the network device 3 stops storing the relevant information of the missed calls, and the first operating means M12' starts obtaining the relevant information of the missed calls stored in the network device 3 and reestablishing these missed calls until all these missed calls are completely handled or the first detecting means M11' detects that the status of the user 2 changes from availability to unavailability once again. After a missed call is reestablished by the first operating means M12', preferably, its relevant information is deleted from the network device 3. In this way, only those missed calls caused by the unavailability of the user 2 are reestablished.

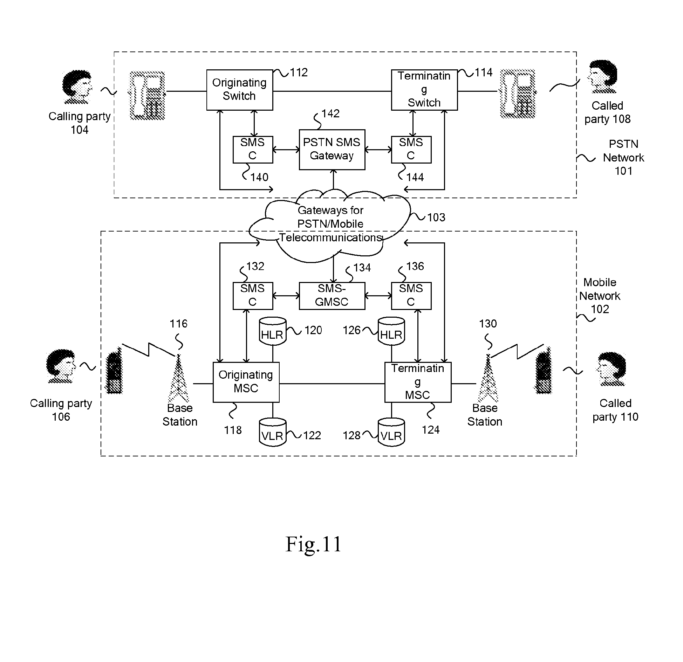

Two embodiments of the communication terminal hereinafter according to the present invention will be described in details with reference to Fig.11 to Fig.13.

Fig.11 illustrates a schematic view of a telecommunication environment according to the present invention and in combination with the existing telecommunication system. As shown in Fig.11, the telecommunication network comprises a PSTN (Public Switched Telephone Network) network 101, a mobile telecommunication network 102 and PSTN/Mobile telecommunication Gateways 103 used for telecommunication service between the PSTN network 101 and the mobile telecommunication network 102.

The PSTN network 101 comprises PSTN switches, such as Originating Switch 112 and Terminating Switch 114, telephones used by two users 104 and 108, Short Message Service Centers (SMSC) 140 and 144, PSTN Short Message Service Gateway (SMS-GW) 142.

The mobile network 102 comprises Mobile Switch Centers (MSC), such as Originating MSC 118 and Terminating MSC 124, Home Location Registers (HLR) 120 and 126, Visitor Location Registers (VLR) 122 and 128, mobile phones used by two users 106 and 110, Base Stations (BS) 116 and 130, Short Message Service Centers 132 and 136, and Short Message Service-Gateway MSC (SMS-GMSC) 134.

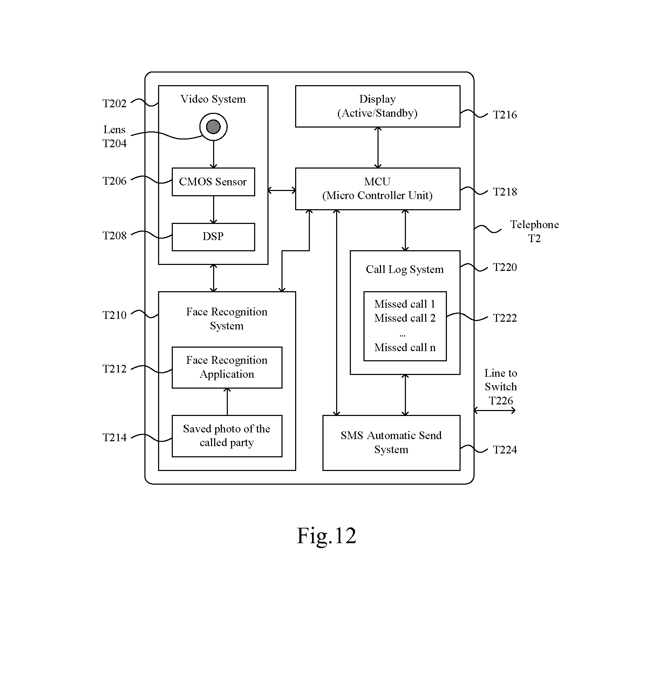

Fig.12 illustrates a block diagram of a telephone according to one embodiment of the present invention. The user 108 is a PSTN user, whose terminal is telephone T2 as shown in Fig.12. The telephone T2 comprises a MCU (Micro Controller Unit) T218, a Video System T202, a Face Recognition System T210, a Call Log System T220, a SMS Automatic Send System T224 and a Display T216.

With reference to Fig.10, The Video System T202, The Face Recognition System T210 and The MCU T218 fulfill the function of the first detecting means M11'. To be more specific, the first detecting means M11' uses the structure shown in Fig. 8. The Video System T202 corresponds to the second detecting means M1111, and the Face Recognition System T210 corresponds to the comparing means M1112. Besides, the Call Log System T220 corresponds to the recording means M13', while the SMS Automatic Send System T224 achieves part of the function of the first operating means M12'.

When the user 108 is away from the telephone T2, the Lens T204 in the Video System T202 detects the unavailability of the user 108, and then the Video System T202 delivers the unavailability information to the MCU T218. The MCU T218 then sends "Standby" status information to the Display T216, and the Display T216 may show "Standby" on the screen.

During the period of the "Standby" status, if there is any incoming call (e.g. the call initiated by the user 104 and/or 106) to the user 108, then the MCU T218 informs the Call Log System T220 to record the incoming call with the calling number, date and time, and the incoming call is recorded as a missed call T222 by the Call Log System T220.

When anyone comes close to the telephone T2, the Lens T204 focuses on his/her face, generates an optical picture and delivers the picture to a CMOS (Complementary Metal-Oxide Semiconductor) Sensor T206. The CMOS Sensor T206 converts the picture to an electrical signal, and the electrical signal is converted to a digital signal by an Analogue/Digital converter. Then the digital signal is transmitted to a DSP (Digital Signal Processor) T208 and processed by the DSP T208. Then the MCU T218 instructs the DSP T208 to send a processed photo to the Face Recognition System T210.

After receiving the photo from the DSP T208, the Face Recognition System T210 starts a face recognition application T212 to compare the received photo with the pre-saved or pre-scanned photo T214 of the user 108.

If the face recognition application T212 recognizes that the received photo is not of the user 108, it sends "status-no-change" information to the MCU T218, and the MCU T218 then delivers the status information to the Display T216. The Display T216 still shows "Standby" on the screen.

If the face recognition application T212 recognizes that the received photo is of the user 108, i.e. the coming person is the user 108, then the Face Recognition System T210 sends "status-change" information to the MCU T218. If the MCU T218 detects that the current status of the telephone is "Standby", the MCU T218 sends "Active" information to the Display T216 and the Display T216 shows "Active" on the screen.

Then, the MCU T218 informs the SMS Automatic Send System T224 to start to send short messages. To this end, the SMS Automatic Send System T224 reads the calling number from the missed call T222 of each newest first order (if any) in the Call Log System T220, and then the SMS Automatic Send System T224 sends the short message to the calling party through the Line to Switch T226 to indicate that the user 108 is available for calling. After successfully sending the short message to the calling party, the missed call T222 related to the calling party is deleted from the Call Log System T220. The SMS Automatic Send System T224 repeats operations of reading/sending/deleting until the short messages are sent to all calling parties of the missed calls T222.

Then the calling party reads the short message and knows that the user 108 is available for calling. And the calling party may make a call to the user 108 right now.

Alternatively, an Automatic Call Back System can be used to replace the SMS Automatic Send System T224. The Automatic Call Back System will call back the calling party of the missed calls instead of sending a short message to the calling party via the SMS Automatic Send System T224.

Additional function can be added to the telephone T2. For example, to protect the user's privacy, the user may have a choice to allow for sending short messages to some selected calling numbers, for example, the calling numbers of company's headquarter, peers, families, and import customers, etc. Moreover, password could be required before activation of the SMS Automatic Send System T224 so as to avoid other persons activating the function with the photo of the user.

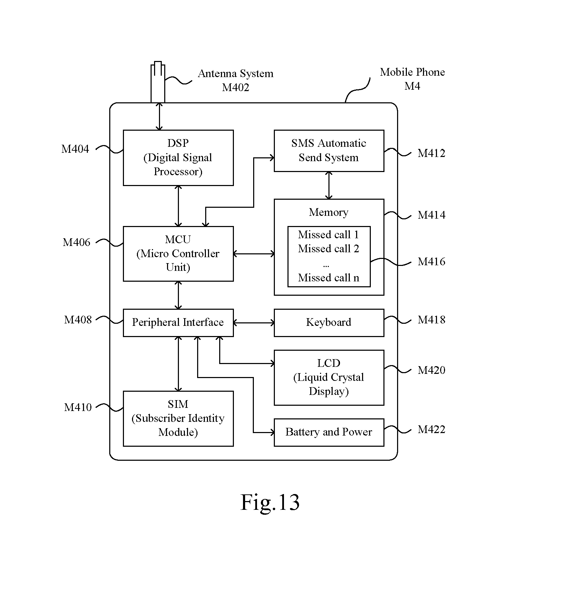

Fig.13 illustrates a block diagram of a mobile phone according to an embodiment of the present invention. The user 110 is a mobile phone user, whose terminal is mobile phone M4 as shown in Fig.13. The mobile phone M4 comprises an Antenna System M402, a DSP (Digital Signal Processor) M404, an MCU (Micro Controller Unit) M406, a peripheral interface M408, a SIM (Subscriber Identity Module) M410, a SMS Automatically Send System M412, a Memory M414, a keyboard M418, a LCD (Liquid Crystal Display) M420 and a Battery/Power M422.

With reference to Fig.10, the function of the first detecting means M11 is mainly performed by the MCU M406. The function of the recording means M13' is performed by a network device, such as the MSC124 (referring to Fig.11). The SMS Automatically Send System M412 achieves part of the functions of the first operating means M12'.

When the mobile phone M4 of the user 110 is powered off, the communication can not be established. During the period that the mobile phone M4 is power off, the Terminating MSC 124 serving the mobile phone M4 of the user 110 saves each incoming call to the user 110 (for example, the call initiated by the user 104 and/or 106) and records the information of the calling number, date and time.

After the mobile phone M4 of the user 110 is powered on and registered to the MSC 124, the MSC124 verifies that the mobile phone is powered on. After powered on and registered to the MSC124, the mobile phone M4 obtains the relevant information of all the missed calls from the MSC 124 and stores them in the Memory M414. The MCU M406 informs the SMS Automatic Send System M412 to start to send short messages, and then the SMS Automatic Send System M412 reads the calling number from the missed call M416 (each newest first order) in the Memory M414, and then the SMS Automatic Send System M412 sends short message to the calling party 104 to indicate that the user 110 is available for calling. After successfully sending the short message to the calling party, the missed call M416 related to the calling party is deleted from the Memory M414. The SMS Automatic Send System M412 repeats the operations of reading/sending/deleting until short messages are sent to all calling parties of the missed calls.

Then the calling party reads the short message and knows that the user 110 is available for calling. And the calling party may make a call to the user 110 right now.

Likewise, the additional function applicable to the telephone T2 described above is also applicable to the mobile phone M4.

As the embodiments of the present invention have been described above, it should be understood that the present invention is not limited to the above specific embodiments. Various modifications or alterations can be made by those skilled in the art without departing from the scope as defined by the appended claims.

## Claims

1. A method of handling missed calls in a communication terminal, comprising:
a. determining whether a user of the communication terminal is available for calling again;
b. obtaining missed calls and reestablishing the missed calls when the user is available for calling again.

2. The method according to claim 1, wherein step a further comprises:
detecting characteristic information of a person close to the communication terminal; and
comparing the characteristic information with prestored characteristic information of the user; and
determining whether the user of the communication terminal is available for calling according to the comparison outcome.

3. The method according to claim 2, wherein the characteristic information comprises ID or physical features of the person.

4. The method according to claim 1, wherein step a further comprises:
detecting whether the communication terminal is powered on; and
determining whether the user of the communication terminal is available for calling according to the detection result.

5. The method according to any one of claims 1 to 4, wherein step b further comprises:
calling back calling parties of the missed calls when the user is available for calling.

6. The method according to any one of claims 1 to 4, wherein step b further comprises:
sending a notification message to the calling parties of the missed calls to inform that the user is available for calling, when the user is available for calling.

7. The method according to claim 6, wherein the notification message comprises SMS, Email or Callback.

8. The method according to any one of claims 1 to 7, further comprising:
storing relevant information of the missed calls when the user is unavailable for calling;
wherein step b only obtains and reestablishes the missed calls stored during the unavailable period of the user.

9. An apparatus in a communication terminal for handling missed calls, comprising:
a first detecting means for detecting whether a user of the communication terminal is available for calling again;
a first operating means for obtaining missed calls and reestablishing the missed calls when the user is available for calling again.

10. The apparatus according to claim 9, wherein the first detecting means further comprises:
a second detecting means for detecting characteristic information of a person close to the communication terminal; and
a comparing means for comparing the characteristic information with prestored characteristic information of the user; and
a determining means for determining whether the user of the communication terminal is available for calling according to the comparison outcome.

11. The apparatus according to claim 10, wherein the characteristic information comprises ID or physical features of the person.

12. The apparatus according to claim 9, wherein the first detecting means is further operable for detecting whether the communication terminal is powered on; and operable for determining that the user of the communication terminal is available for calling when the communication terminal is powered on, otherwise determining that the user of the communication terminal is unavailable for calling.

13. The apparatus according to any one of claims 9 to 12, wherein the first operating means is further operable for calling back calling parties of the missed calls when the user is available for calling.

14. The apparatus according to any one of claims 9 to 12, wherein the first operating means is further operable for sending a notification message to the calling parties of the missed calls to inform that the user is available for calling, when the user is available for calling.

15. The apparatus according to claim 14, wherein the notification message comprises SMS, Email or Callback.

16. The apparatus according to any one of claims 9 to 15, further comprising:
a recording means for storing relevant information of the missed calls when the user is unavailable for calling;
wherein said first operating means is only operable for obtaining and reestablishing the missed calls stored by the recording means.

17. A communication terminal comprising the apparatus according to any one of claims 10 to 16.
